# EUROPÄISCHE PATENTSCHRIFT

(11) **EP 1 530 679 B1**
(45) Veröffentlichungstag und Bekanntmachung des Hinweises auf die Patenterteilung: **11.03.2009**
(21) Anmeldenummer: 03740030.6
(22) Anmeldetag: 23.05.2003
(51) Int. Cl.: F02M 47/02, F02M 59/46, F02M 61/16, F16K 31/00

(54) **KRAFTSTOFFEINSPRITZVENTIL MIT EINEM VENTIL ZUM STEUERN VON KRAFTSTOFF**
FUEL INJECTION VALVE WITH A VALVE FOR CONTROLLING FUEL
SOUPAPE D'INJECTION DE CARBURANT COMPRENANT UNE SOUPAPE DE COMMANDE DE CARBURANT

(30) Priorität: 13.08.2002 DE 10236985
(43) Veröffentlichungstag der Anmeldung: 18.05.2005
(73) Patentinhaber: ROBERT BOSCH GMBH, 70442 Stuttgart (DE)
(72) Erfinder: MATTES, Patrick, 70569 Stuttgart (DE)
(86) Internationale Anmeldenummer: PCT/DE2003/001680
(87) Internationale Veröffentlichungsnummer: WO 2004/018865

(56) Entgegenhaltungen:
- EP-A- 0 199 632
- DE-A- 4 406 901
- DE-A- 19 946 833
- US-A- 4 722 312
- US-A- 5 975 428
- US-B1- 6 295 971

## Beschreibung

Die Erfindung betrifft ein Ventil zum Steuern von Flüssigkeiten gemäß der im Oberbegriff des Patentanspruches 1 näher definierten Art.

### Stand der Technik

Aus der DE 199 46 833 C2 ist ein Ventil zum Steuern von Flüssigkeiten bekannt, welches eine piezoelektrische Einheit zur Betätigung eines Ventilglieds aufweist. Das Ventilglied ist in einer Bohrung eines Ventilkörpers axial verschiebbar angeordnet und weist an einem Ende ein Ventilschließglied auf. Das Ventilschließglied wirkt mit wenigstens einem an dem Ventilkörper vorgesehenen Sitz zum Öffnen und Schließen des Ventils zusammen, wobei das Ventilschließglied einen Niederdruckbereich mit einem Systemdruck von einem Hochdruckbereich trennt. Des weiteren ist eine Befülleinrichtung zum Ausgleich einer Leckagemenge des Niederdruckbereichs durch Entnahme von Hydraulikflüssigkeit des Hochdruckbereichs vorgesehen. Die Befülleinrichtung ist mit einem Kanal, der eine Drosselbohrung aufweist, ausgebildet. Ein Durchmesser der Drosselbohrung ist derart ausgelegt, daß ein die Drosselbohrung passierender Volumenstrom aus dem Hochdruckbereich bei einem definierten Minimalhochdruck die Leckagemenge des Niederdruckbereiches ausgleicht.

Derartige Ventile zum Steuern von Flüssigkeiten werden nach der Montage einer Funktionsprüfung unterzogen, während der eine Flüssigkeitsmenge bestimmt wird, die während einer Einspritzung bei geöffnetem Ventil von diesem abgegeben wird.

Dabei haben solche zur Ansteuerung von Kraftstoffeinspritzventilen eingesetzte Ventile jedoch den Nachteil, daß sie nach der Montage nicht individuell auf eine definierte Einspritzmenge einstellbar sind, weshalb eine während einer Einspritzung ausgebrachte Flüssigkeitsmenge bei gleichbleibender Einspritzdauer nicht definiert veränderbar ist.

Aus der EP 0199 632 A1 ist weiterhin ein Ventil zum Steuern von Flüssigkeiten mit einem Ventilraum bekannt, welcher in Abhängigkeit einer Stellung eines über eine Aktuatorik ansteuerbaren Ventilschließglieds mit einem Hochdruckbereich verbindbar ist und eine Verbindung mit einem Niederdruckbereich aufweiset. Über ein Rückschlagventil erfolgt eine druckabhängige Drosselung der Verbindung des Ventilraums mit dem Niederdruckbereich.

### Vorteile der Erfindung

Das erfindungsgemäße Kraftstoffeinspritzventil mit den Merkmalen des Patentanspruches 1 hat demgegenüber den Vorteil, daß eine Flüssigkeitssteuerung auch nach einer Montage des Ventils gezielt einstellbar ist.

Dadurch besteht beispielsweise bei einem Kraftstoffeinspritzventil die Möglichkeit, eine Einspritzmenge nach der Montage individuell und definiert einzustellen, d.h. eine ausgebrachte Flüssigkeitsmenge bei gleichbleibender Einspritzdauer bedarfsweise zu vergrößern oder zu verkleinern.

Weitere Vorteile und vorteilhafte Ausgestaltungen des Gegenstandes der Erfindung sind der Beschreibung, den Patentansprüchen und der Zeichnung entnehmbar.

### Zeichnung

Ein Ausführungsbeispiel eines erfindungsgemäßen Ventils zum Steuern von Flüssigkeiten ist in der Zeichnung schematisch vereinfacht dargestellt und wird in der beiliegenden Beschreibung näher erläutert. Es zeigen
Figur 1 eine schematische, ausschnittsweise Darstellung eines zur Ansteuerung eines Kraftstoffeinspritzventils für Brennkraftmaschinen vorgesehenen, Kraftstoff steuernden Ventils im Längsschnitt;
Figur 2 einen zeitlichen Verlauf eines Nadelhubs und einen damit korrespondierenden zeitlichen Druckverlauf in einem Leckageablaufkanal des Ventils gemäß Figur 1; und
Figur 3 einen mit dem zeitlichen Verlauf des Nadelhubs korrespondierenden Verlauf einer Einspritzmenge in Abhängigkeit einer Ansteuerdauer t des Kraftstoffeinspritzventils.

### Beschreibung des Ausführungsbeispiels

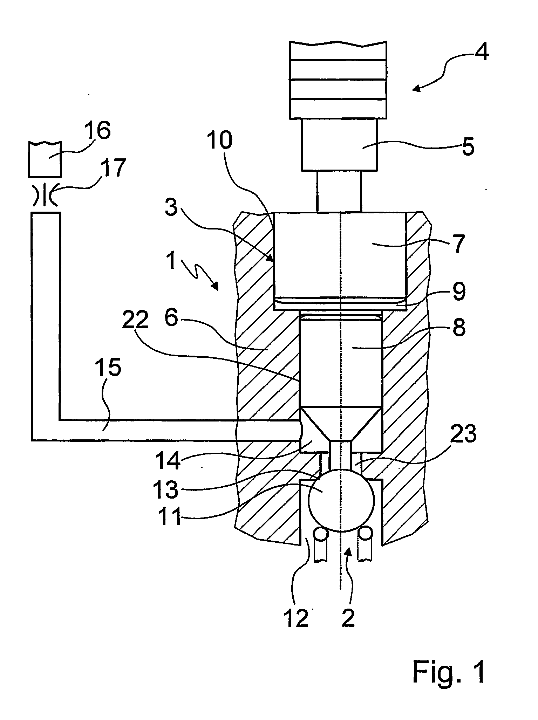

Das in Figur 1 dargestellte Ausführungsbeispiel zeigt eine Verwendung des erfindungsgemäßen Ventils bei einem Kraftstoffeinspritzventil 1 für Brennkraftmaschinen von Kraftfahrzeugen. In der vorliegenden Ausführung ist das Kraftstoffeinspritzventil 1 als Common-Rail-Injektor zur Einspritzung von Kraftstoff in einen Brennraum einer Brennkraftmaschine ausgebildet.

Die Kraftstoffeinspritzung wird über das Druckniveau in einem Ventilsteuerraum 12 gesteuert, welcher in an sich bekannter Weise mit einem Hochdruckbereich 2, der mit einem für mehrere Kraftstoffeinspritzventile gemeinsamen Hochdruckspeicherraum (Common-Rail) verbunden ist und eine Einspritzdüse mit Kraftstoff versorgt, verbunden ist.

Der Ventilsteuerraum 12 ist hierzu von einer nicht näher dargestellten Düsennadel des Kraftstoffeinspritzventiles 1 begrenzt, welche bei Senkung des Druckniveaus in dem Ventilsteuerraum 12 von einem nicht näher dargestellten Sitz, in dessen Bereich eine oder mehrere ansonsten durch die Düsennadel geschlossene Ausspritzöffnungen vorgesehen sind, abhebt und einen Ausstrom von unter Hochdruck stehendem Kraftstoff durch diese Ausspritzöffnungen erlaubt.

Ein Einspritzbeginn, eine Einspritzdauer und eine Einspritzmenge werden in dem Kraftstoffeinspritzventil 1 über Kraftverhältnisse derart eingestellt, daß ein Ventilglied 3 über eine als piezoelektrischer Aktor 4 ausgebildete piezoelektrische Aktuatoreinheit angesteuert wird. Der piezoelektrische Aktor 4 ist auf der dem Ventilsteuerraum 12 und dem Brennraum abgewandten Seite des Ventilgliedes 3 angeordnet und in an sich bekannter Art und Weise aus mehreren keramischen Schichten aufgebaut.

Auf seiner dem Ventilglied 3 zugewandten Seite ist der piezoelektrische Aktor 4 mit einem Aktorkopf 5 und auf seiner dem Ventilglied 3 abgewandten Seite in nicht näher dargestellte Art und Weise mit einem Aktorfuß versehen, der sich wiederum an einer Wand eines Ventilgehäuses 6 abstützt.

Das Ventilglied 3 ist aus einem ersten Kolben 7 und einem zweiten Kolben 8 gebildet, zwischen welchen eine Hydraulikkammer 9 ausgebildet ist. Das Ventilglied 3, seine Kolben 7 und 8 und der piezoelektrische Aktor 4 sind dabei in Reihe angeordnet. Die beiden Kolben 7, 8 sind axial in einer Längsbohrung 10 des Ventilgehäuses 6 verschiebbar angeordnet, wobei der erste Kolben 7 einen sogenannten Stellkolben und der zweite Kolben 8, welcher ein Ventilschließglied 11 eines Schaltventiles 12 betätigt, einen sogenannten Betätigungskolben der Aktuatorik des Kraftstoffeinspritzventiles 1 darstellt.

Die Hydraulikkammer 9 schließt zwischen den beiden sie begrenzenden Kolben 7 und 8, bei denen der Durchmesser des zweiten Kolbens 8 kleiner ist als der Durchmesser des ersten Kolbens 7, ein gemeinsames Ausgleichsvolumen ein und dient als eine hydraulische Übersetzung.

Die Hydraulikkammer 9 ist dabei derart zwischen den Kolben 7 und 8 eingespannt, daß der zweite Kolben 8 des Ventilgliedes 3 einen um das Übersetzungsverhältnis der Kolbendurchmesser vergrößerten Hub macht, wenn der größere erste Kolben 7 durch den piezoelektrischen Aktor 4 um eine bestimmte Wegstrecke bewegt wird. Je nach Durchmesserverhältnis zwischen dem Stellkolben 7 und dem Betätigungskolben 8 hat eine Auslenkung des piezoelektrischen Aktors 4 eine Verschiebung des Ventilschließgliedes 11 zur Folge.

Zudem können Toleranzen aufgrund von Temperaturgradienten im Kraftstoffeinspritzventil 1 oder unterschiedlicher Temperaturausdehnungskoeffizienten der verwendeten Materialien sowie eventuelle Setzeffekte auf einfache Art und Weise über das Ausgleichsvolumen der Hydraulikkammer 9 ausgeglichen werden, ohne daß dadurch eine Änderung der Position des anzusteuernden Ventilschließgliedes 11 auftritt.

An dem ventilsteuerraumseitigen Ende des Ventilgliedes 3 wirkt das vorliegend als Kugel ausgeführte Ventilschließglied 11 mit einem an dem Ventilgehäuse 6 im Bereich einer sogenannten Ablaufdrossel 23 ausgebildeten Ventilsitz 13 zusammen, wobei das Ventilschließglied 11 bei Anlage an dem Ventilsitz 13 einen Ventilraum 14 von dem mit dem Hochdruckbereich 2 verbundenen Ventilsteuerraum 12 trennt.

Demgemäß ist der in dem Ventilraum 14 herrschende Druck bei geschlossenem Schaltventil 12 erheblich niedriger als der Druck des Ventilsteuerraumes 12.

Von dem Ventilraum 14 führt ein Leckageablaufkanal 15 weg, der eine Verbindung zwischen dem Ventilraum 14 und einem Niederdruckbereich 16 des Kraftstoffeinspritzventils 1 darstellt. Der Leckageablaufkanal 15 ist mit einer Drossel 17 versehen, welche einen Druckausgleich zwischen dem Ventilraum 14 und dem Niederdruckbereich 16 drosselt.

Das Kraftstoffeinspritzventil nach Figur 1 arbeitet in nachfolgend beschriebener Art und Weise.

Im Betrieb des Kraftstoffeinspritzventiles 1 herrscht in dem Ventilsteuerraum 12 ein Hochdruck, welcher bei dem hier vorliegenden Common-Rail-System auch als Raildruck bezeichnet wird. Aufgrund des deutlich niedrigeren Druckniveau in dem Ventilraum 14 ist der Ventilsitz 13 geschlossen, d.h. das Ventilschließglied 11 liegt an dem Ventilsitz 13 dichtend an. Damit ist der Ventilraum 14 gegenüber dem Hochdruckbereich 2 abgeschlossen und mit dem Niederdruckbereich 16 über den Leckageablaufkanal 15 mit der Drossel 17 verbunden.

Um eine Einspritzung des Kraftstoffeinspritzventiles 1 einzuleiten, wird die Verbindung des Ventilraumes 14 zu dem Ventilsteuerraum 12 geöffnet, und zwar derart, daß der piezoelektrische Aktor 4 bzw. dessen piezoelektrische Keramik bestromt wird, was zu einer Längung der piezoelektrischen Keramik führt. Die Längung der piezoelektrischen Keramik bewirkt eine axiale Verstellung des mit dem piezoelektrischen Aktor 4 wirkverbundenen ersten Kolbens 7, die eine von der Hydraulikkammer 9 entsprechend dem Durchmesserverhältnis des Durchmessers des ersten Kolbens 7 und des zweiten Kolbens 8 übersetzte axiale Verstellung des zweiten Kolbens 8 bewirkt. Die resultierende axiale Verschiebung bzw. Verstellung des zweiten Kolbens 8 führt zu einem Abheben des Ventilschließgliedes 11 von dem Ventilsitz 13.

Bei abgehobenem Ventilschließglied 11 entspannt sich der Druck des Ventilsteuerraums 12 durch die Ablaufdrossel 23 in Richtung des Ventilraumes 14, was zu einem Abheben der Düsennadel von ihrem Sitz und somit zu einem Öffnen des Kraftstoffeinspritzventiles führt.

Gleichzeitig steigt der Druck des Ventilraumes 14 und der Druck in den Leckageablaufkanal 15 an, wobei eine Flüssigkeitssäule, welche sich im Leckageablaufkanal 15 befindet, beschleunigt wird. Aus der Trägheit der Flüssigkeitssäule resultiert ein Druckanstieg in dem Leckageablaufkanal 15, der auch durch die Drosselwirkung der Drossel 17 beeinflußt wird.

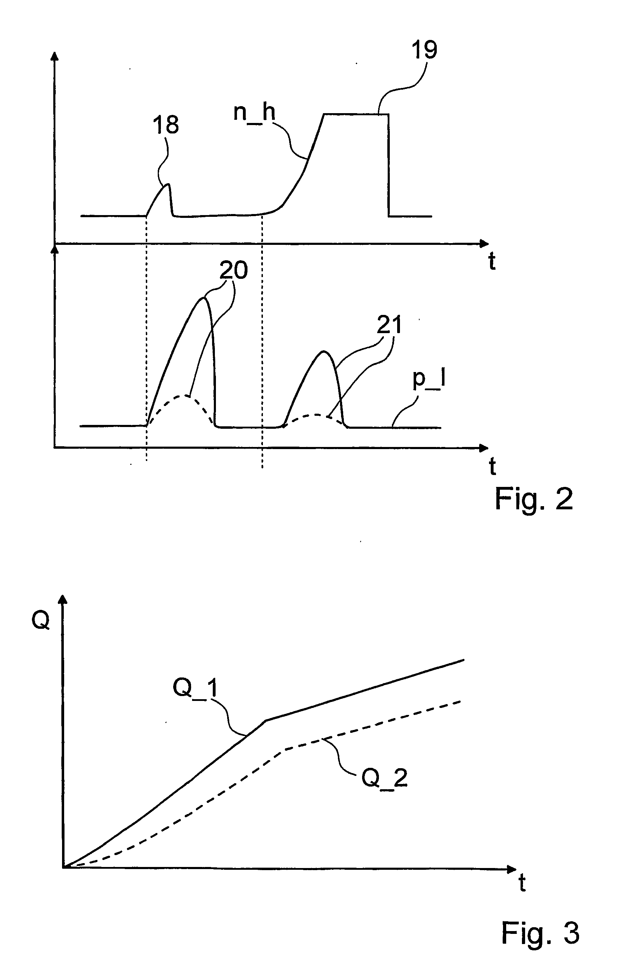

Der Zusammenhang zwischen dem Nadelhub, eines Drucks p_l im Leckageablaufkanal 15 vor der Drossel 17 und einer Einspritzmenge Q des Kraftstoffeinspritzventiles 1 in Abhängigkeit der Ansteuerdauer t ist in den Figuren 2 und 3 durch die zeitlichen Verläufe des Nadelhubs n_h, des Drucks p_1 des Leckageablaufkanals 15 vor der Drossel 17 und der Einspritzmenge Q dargestellt.

Dabei stellen die durchgezogenen Linien der Verläufe des Drucks p_l im Leckageablaufkanal 15 und der Einspritzmenge Q die Verläufe dar, welche sich bei einer Drossel mit höherer Drosselwirkung ergeben. Die strichliert dargestellten Verläufe des Drucks p_l des Leckageablaufkanals 15 und der Einspritzmenge Q stellen jene Verläufe über der Ansteuerdauer t dar, welche sich bei einer Drossel mit einer vergleichsweise geringeren Drosselwirkung ergeben.

Bezug nehmend auf Figur 2 ist oberhalb des Verlaufes des Drucks p_l im Leckageablaufkanal 15 der Verlauf des Nadelhubs n_h über der Ansteuerdauer t des Kraftstoffeinspritzventiles 1 aufgetragen. Der Verlauf des Nadelhubs n_h weist zwei Ausschläge auf, wovon ein erster kleinerer Ausschlag 18 ein erstes Öffnen des Kraftstoffeinspritzventiles 1 und ein zweiter Ausschlag 19 ein zweites Öffnen des Kraftstoffeinspritzventiles 1 graphisch darstellt. Mit dem Verlauf des Nadelhubes n_h korrespondiert der Verlauf des Drucks p_l des Leckageablaufkanales 15, der ebenfalls zwei positive Ausschläge 20, 21 aufweist, die zeitlich versetzt zu den Ausschlägen 18 und 19 des Verlaufes des Nadelhubes n_h auftreten.

Signifikant dabei ist, daß der erste Ausschlag 20 des Verlaufs des Drucks p_l größer ist als der zweite Ausschlag 21 des Verlaufs des Drucks p_l. Dies ergibt sich aus der Tatsache, daß die Höhe eines Anstiegs des Drucks p-1 in dem Leckageablaufkanal 15 unter anderem von einem Ölgegendruck im Leckageablaufkanal 15 abhängig ist und die Flüssigkeitssäule in dem Leckageablaufkanal 15 bei der ersten Einspritzung aufgrund ihrer Trägheit der Beschleunigung durch den Druckanstieg im Ventilraum 14 stärker entgegenwirkt als dies bei der zeitlich kurz darauf erfolgenden weiteren Einspritzung der Fall ist.

Des weiteren ist der Druckanstieg auch von einer Steuermenge, einem Strömungsquerschnitt des Leckageablaufkanales 15 und der Länge des Leckageablaufkanales 15 zwischen dem Mündungsbereich im Ventilraum 14 und der Drossel 17 abhängig.

Unter dem Begriff Steuermenge ist vorliegend jene Kraftstoffmenge zu verstehen, welche bei abgehobenem Ventilschließglied 11 aus dem Ventilsteuerraum 12 in den Ventilraum 14 und danach über den Leckageablaufkanal 15 in den Niederdruckbereich 16 abfließt.

Zusätzlich liegt zwischen dem Druckanstieg und der Drosselwirkung der Drossel 17 ein Zusammenhang vor, welcher jeweils durch den als durchgezogene Linie und den als strichlierte Linie dargestellten Verlauf des Drucks p_l des Leckageablaufkanales 15 vereinfacht angedeutet ist. Die strichlierte Linie verdeutlicht dabei, daß sich durch eine Verkleinerung der Drosselwirkung der Drossel 17 ein kleinerer Druckanstieg sowohl bei der ersten Einspritzung, welche hier eine Voreinspritzung darstellt, als auch bei der zweiten Einspritzung, welche hier eine Haupteinspritzung in einen Brennraum einer Brennkraftmaschine darstellt, ergibt.

Wie oben beschrieben, korrespondiert der Verlauf der Einspritzmenge Q ebenfalls mit dem Verlauf des Drucks p_l des Leckageablaufkanales 15 und somit auch mit dem Verlauf des Nadelhubes n_h. Darüber hinaus steht die Einspritzmenge Q auch im Zusammenhang mit der Drosselwirkung der Drossel 17, da die Einspritzmenge Q mit reduzierter Drosselwirkung der Drossel 17 kleiner ist als beim Einsatz einer Drossel mit größerer Drosselwirkung.

Dies ist in Figur 3 anhand zweier Verläufe Q.1, Q.2 der Einspritzmenge Q wiedergegeben, wobei die strichlierte Linie Q.2 einen Verlauf der Einspritzmenge Q beim Einsatz einer Drossel mit kleiner Drosselwirkung im Leckageablaufkanal 15 zeigt und die durchgezogene Linie Q.1 den Verlauf der Einspritzmenge Q über der Ansteuerdauer t des Kraftstoffeinspritzventils 1 darstellt, der sich mit einer Drossel mit großer Drosselwirkung in dem Leckageablaufkanal 15 einstellt.

Im Kraftstoffeinspritzventil 1 bzw. im Leckageablaufkanal 15 ist eine Drossel angeordnet, welche vorliegend als eine Stellschraube ausgeführt ist, die in nicht dargestellter Art und Weise derart in das Ventilgehäuse 6 des Kraftstoffeinspritzventiles eingeschraubt ist, daß sie mit ihrem einen Ende in den Strömungsquerschnitt des Leckageablaufkanals 15 eingreift. Mit einer derartig ausgeführten Drossel 17 besteht die Möglichkeit, nach einer Montage des Kraftstoffeinspritzventiles 1 die Einspritzmenge Q des Kraftstoffeinspritzventiles 1 durch Verstellen der Eingriffstiefe der Stellschraube in den Strömungsquerschnitt des Leckageablaufkanales 15 und somit durch Ändern der Drosselwirkung der Drossel 17, gegebenenfalls während einer Funktionsprüfung des Kraftstoffeinspritzventiles 1, definiert nachzuregeln, so daß eine Einspritzmenge Q des Kraftstoffeinspritzventiles 1 einer gewünschten Einspritzmenge entspricht.

Alternativ hierzu kann es auch vorgesehen sein, daß die Drossel eine nachträglich montierbare Prüfdrossel darstellt, so daß der Strömungsquerschnitt bzw. die Drosselwirkung des Leckageablaufkanales 15 bzw. der Verbindung des Ventilraumes 14 mit dem Niederdruckbereich 16 variierbar ist. Dabei sind unter dem Begriff "Prüfdrossel" normierte Bauteile zu verstehen, welche jeweils verschiedene Drosselgrade aufweisen. Während einer Funktionsprüfung besteht somit die Möglichkeit, solange Prüfdrosseln mit unterschiedlichen definierten Drosselgraden in einen dafür vorgesehenen Bereich des Leckageablaufkanales 15 einzusetzen, bis eine exakte Einstellung der Einspritzmenge Q des Kraftstoffeinspritzventiles 1 bei einer bestimmten Ansteuerdauer erreicht ist.

Der aufgestaute Druck bzw. ein Druckanstieg im Leckageablaufkanal 15 führt ebenfalls zu einem Druckanstieg im Ventilraum 14. Aus einem Druckausgleich zwischen dem Ventilraum 14 und der Hydraulikkammer 9 resultiert eine Veränderung des Verhaltens des hydraulischen Übersetzers bzw. der Hydraulikkammer 9, womit sich eine Verschiebung eines Einspritztiming bzw. des Einspritzverhaltens des Kraftstoffeinspritzventiles 1 ergibt. Der Druck des Leckageablaufkanales 15.entspricht nämlich im wesentlichen dem Druck des Ventilraumes 14 entspricht, der wiederum über einen Spaltraum 22 auf die Hydraulikkammer 9 wirkt, wodurch ein Öffnungszeitpunkt des Ventilschließglieds 11 in Abhängigkeit des Drucks in dem Leckageablaufkanal 15 variiert. Der Spaltraum 22 wird von dem Ventilgehäuse 6 sowie dem zweiten Kolben 8 des Ventilglieds 3 gebildet, wobei der Spaltraum 22 hier derart ausgeführt ist, daß eine hohe Drosselwirkung zwischen dem Ventilraum 14 und der Hydraulikkammer 9 vorliegt und kurzfristige Druckschwankungen keinen Einfluß auf die Hydraulikkammer 9 haben.

In einer von der vorbeschriebenen Ausführungsform abweichenden Ausführung des Ventils nach der Erfindung kann es auch vorgesehen sein, daß eine Länge der Verbindung zwischen dem Ventilraum und dem Niederdruckbereich, d.h. die Länge zwischen dem Mündungsbereich des Leckageablaufkanales im Ventilraum und der Drossel des Leckageablaufkanales, veränderbar ist. Dies kann vorzugsweise dadurch geschehen, daß bei der Einstellung der Einspritzmenge über eine Prüfdrossel bzw. eine Wechseldrossel nicht nur der Drosselquerschnitt, sondern auch die Länge der Verbindung durch den Einsatz verschiedener Prüfdrosseln oder anderer geeigneter Maßnahmen variiert wird.

## Patentansprüche

1. Kraftstoffeinspritzventil (1) mit einem Ventil zum Steuern von Kraftstoff und einem Ventilraum (14), welcher in Abhängigkeit einer Stellung eines über eine Aktuatorik ansteuerbaren Ventilschließglieds (11) mit einem Hochdruckbereich (2) verbindbar ist und eine Verbindung (15) mit einem Niederdruckbereich (16) aufweist,
**dadurch gekennzeichnet,**
**dass** in die Verbindung (15) zwischen dem Ventilraum (14) und dem Niederdruckbereich (16) eine Drossel (17) mit einem von außen variierbaren Drosselquerschnitt integriert ist oder Prüfdrosseln mit jeweils unterschiedlichen Drosselquerschnitten einsetzbar sind, und dass zur Einstellung eines definierten Druckanstiegs (20, 21) in dem Ventilraum (14) bei geöffneter Verbindung zwischen Ventilraum (14) und dem Hochdruckbereich (12) der Drosselquerschnitt der Drossel (17) nach der Montage des Kraftstoffeinspritzventils von außen nachregelbar ist bzw. nach der Montage des Kraftstoffeinspritzventils die entsprechende Prüfdrossel eingesetzt ist.

2. Kraftstoffeinspritzventil nach Anspruch 1, **dadurch gekennzeichnet, daß** eine Länge der Verbindung (15) zwischen dem Ventilraum (14) und dem Niederdruckbereich (16) veränderbar ist.

3. Kraftstoffeinspritzventil nach Anspruch 1 oder 2, **dadurch gekennzeichnet, daß** ein hydraulischer Übersetzer (9) der Aktuatorik derart fluidisch mit dem Ventilraum (14) verbunden ist, daß in Abhängigkeit eines Drucks (p1) in dem Ventilraum (14) eine Wirkungsweise des Übersetzers (9) variiert.

## Claims

1. Fuel injection valve (1) having a valve for controlling fuel, and having a valve chamber (14) which, as a function of a position of a valve closing member (11) which can be activated by means of an actuator arrangement, can be connected to a high-pressure region (2) and has a connection (15) to a low-pressure region (16),
**characterized**
**in that** a throttle (17) with a throttle cross section which can be varied from the outside is integrated, or test throttles with in each case different throttle cross sections can be inserted into the connection (15) between the valve chamber (14) and the low-pressure region (16), and in that, in order to set a defined pressure rise (20, 21) in the valve chamber (14), when the connection between the valve chamber (14) and the high-pressure region (12) is open, the throttle cross section of the throttle (17) can be re-adjusted from the outside after the assembly of the fuel injection valve or the corresponding test throttle is inserted after the assembly of the fuel injection valve.

2. Fuel injection valve according to Claim 1, **characterized in that** a length of the connection (15) between the valve chamber (14) and the low-pressure region (16) can be varied.

3. Fuel injection valve according to Claim 1 or 2, **characterized in that** a hydraulic booster (9) of the actuator arrangement is fluidically connected to the valve chamber (14) in such a way that a mode of operation of the booster (9) is varied as a function of a pressure (p1) in the valve chamber (14).

## Revendications

1. Soupape d'injection de carburant (1) comprenant une soupape de commande de carburant et un espace de soupape (14), qui peut être connecté à une plage haute pression (2) en fonction d'une position d'un organe de fermeture de soupape (11) commandable par le biais d'un système d'actionneurs, et qui présente une connexion (15) à une plage basse pression (16),
**caractérisée en ce**
**qu'**un étranglement (17) avec une section transversale d'étranglement variable de l'extérieur est intégré dans la connexion (15) entre l'espace de soupape (14) et la plage basse pression (16), ou en ce que des étranglements de contrôle avec des sections transversales d'étranglement différentes peuvent être utilisés, et en ce que pour l'ajustement d'une augmentation de pression définie (20, 21) dans l'espace de soupape (14) lorsque la connexion entre l'espace de soupape (14) et la plage haute pression (2) est ouverte, la section transversale d'étranglement de l'étranglement (17) après le montage de la soupape d'injection de carburant peut être réglée à nouveau depuis l'extérieur, ou on utilise l'étranglement de contrôle correspondant après le montage de la soupape d'injection de carburant.

2. Soupape d'injection de carburant selon la revendication 1, **caractérisée en ce qu'**une longueur de la connexion (15) entre l'espace de soupape (14) et la plage basse pression (16) peut être modifiée.

3. Soupape d'injection de carburant selon la revendication 1 ou 2, **caractérisée en ce qu'**un convertisseur hydraulique (9) est connecté fluidiquement à l'espace de soupape (14) de telle sorte qu'un mode de fonctionnement du convertisseur (9) varie en fonction d'une pression (p1) dans l'espace de soupape (14).
